(19) Europäisches Patentamt
European Patent Office
Office européen des brevets

(11) EP 0 601 418 B1

# (12) EUROPÄISCHE PATENTSCHRIFT

(45) Veröffentlichungstag und Bekanntmachung des Hinweises auf die Patenterteilung:
**29.04.1998 Patentblatt 1998/18**

(51) Int Cl.$^6$: **C07F 9/38**, C07F 9/40, C07F 9/32, C07F 9/30, C11D 1/34

(21) Anmeldenummer: **93119099.5**

(22) Anmeldetag: **26.11.1993**

(54) **Fluorierte Carbonsäureester von Phosphono- und Phosphinocarbonsäuren sowie deren Verwendung**

Fluorinated carbonic esters from phosphono and phosphino carboxylic acids and their use

Esters carboniques fluorinés d'acides phosphono et phosphino carboxyliques et leur utilisation

(84) Benannte Vertragsstaaten:
**BE CH DE ES FR GB IT LI NL**

(30) Priorität: **09.12.1992 DE 4241478**

(43) Veröffentlichungstag der Anmeldung:
**15.06.1994 Patentblatt 1994/24**

(73) Patentinhaber: **BAYER AG**
**51368 Leverkusen (DE)**

(72) Erfinder:
- **Pohmer, Klaus, Dr.**
  **D-51061 Köln (DE)**
- **Weber, Rainer, Dr.**
  **D-51519 Odenthal (DE)**
- **Block, Hans-Dieter, Dr.**
  **D-51381 Leverkusen (DE)**
- **Dörzbach-Lange, Cornelia, Dr.**
  **D-51515 Kürten-Bechen (DE)**
- **Moretto, Hans-Heinrich, Dr.**
  **D-51375 Leverkusen (DE)**

(56) Entgegenhaltungen:
**EP-A- 0 238 825**
**DE-A- 2 424 243**
**US-A- 4 293 441**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fluorierte Carbonsäureester von Phosphono- oder Phosphinocarbonsäuren sowie deren Verwendung als grenzflächenaktive Mittel.

Perfluoralkylgruppenhaltige Verbindungen finden aufgrund ihrer hohen Grenzflächenaktivität vielfältige Verwendung als Fluortensid in der Technik. Typische Anwendungen sind der Einsatz als Netz-, Emulgier- und Verlaufsmittel bei Filmbeschichtung, in Lacken oder in Spül- und Reinigungsmitteln (vgl. "Ullmann, Enzyklopädie der technischen Chemie, 4. Auflage 1982, Band 22, S. 500"), Weitere Einsatzgebiete sind im Bereich der Oberflächen- oder Galvanotechnik z.B. zur Lösung von Benetzungsproblemen, Verminderung von Ausschlepp- und Verdampfungsverlusten sowie zur Verbesserung des Oberflächenfinishes (vgl. "J.N.Meußdoerffer und H. Niederprum, Chemikerzeitung 104 (1980) 45-52").

Beispiele für solche Fluortenside sind Salze von Perfluorcarbon- oder Sulfonsäuren und polyethersubstituierte Perfluoralkylverbindungen (vgl. "H.G. Klein, J.N. Meußdoerffer und H. Niederprum, Metalloberfläche 29 (1975) 559-567"). Wege zu deren Synthese sind in "J.N. Meußdoerffer und H. Niederprum, Chemikerzeitung 104 (1980) 45-52" beschrieben. Die perfluorierten Ausgangsverbindungen der oben genannten Fluortenside sind technisch auf drei unterschiedlichen Synthesewegen zugänglich:

a) elektrochemische Fluorierung,

b) Telomerisation von Perfluorolefinen, insbesondere Tetrafluorfluorethylen,

c) Oligomerisierung von Tetrafluorethylen.

Da die genannten Methoden zur Herstellung der perfluorierten Ausgangsverbindungen technisch sehr aufwendig sind, resultieren hohe Kosten bei der Herstellung der gewünschten perfluorgruppenhaltigen chemischen Verbindungen.

Aufgabe war es, fluorgruppenhaltige organmodifizierte Tenside zur Verfügung zu stellen, die als grenzflächenaktive Wirkstoffe eingesetzt werden können und deren Herstellung einfach und kostengünstig möglich ist. Diese Aufgabe wurde durch die erfindungsgemäßen fluorierten Carbonsäureester von Phosphono- und Phosphinocarbonsäuren gelöst.

Gegenstand der Erfindung sind fluoralkylgruppenhaltige Carbonsäureester von Phosphono- oder Phosphinocarbonsäuren der allgemeinen Formel (I)

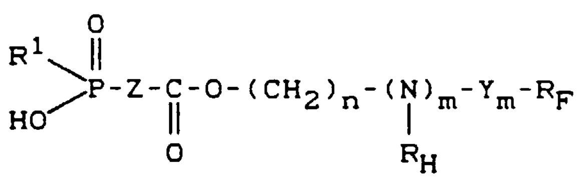

(I),

worin

$R^1$ eine Hydroxylgruppe, eine Methylgruppe, eine Ethylgruppe oder ein Phenylrest ist,

$R_F$ ein verzweigter oder linearer Fluoralkylrest mit 1 bis 18 Kohlenstoffatomen ist oder ein fluorierter, verzweigter oder linearer Mono- oder Polyether mit 1-18 Kohlenstoffatomen ist,

$R_H$ ein verzweigter oder linearer Alkylrest mit 1 bis 10 Kohlenstoffatomen ist,

Y eine >C=O,

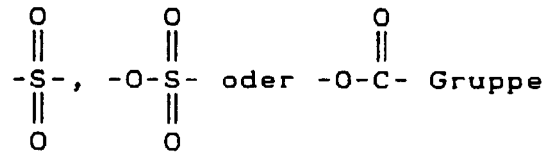

darstellt,

Z für einen linearen oder verzweigten Alkylenrest mit 1 bis 20 Kohlenstoffatomen
oder
für einen durch Aminogruppen, die ihrerseits durch $C_1$- bis $C_{10}$-Alkylgruppen oder Arylgruppen substituiert sein können, unterbrochenen linearen oder verzweigten Alkylenrest mit 1 bis 20 Kohlenstoffatomen
oder
für einen durch eine oder mehrere Gruppen der Struktur $-COR^2$ substituierten, linearen oder verzweigten Alkylenrest mit 1 bis 20 Kohlenstoffatomen
oder
für einen durch eine oder mehrere Gruppen der Struktur $-PO_2HR^1$ substituierten, linearen oder verzweigten Alkylenrest mit 1 bis 20 Kohlenstoffatomen steht, wobei $R^1$ dieselbe Bedeutung wie oben hat,

m 0 oder 1 sein kann,

n eine ganze Zahl von 0 bis 6 darstellt und

$R^2$ für einen Hydroxylrest oder
einen Rest der Struktur

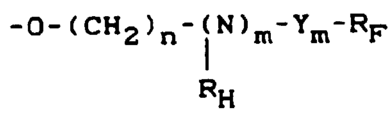

oder für einen linearen oder verzweigten Alkoxyrest mit 1 bis 20 Kohlenstoffatomen steht, wobei n, m, $R_H$, $R_F$ und Y die gleiche Bedeutung wie oben haben,

und deren Salze.

Fluoralkylgruppenhaltige Carbonsäureester von Phosphonooder Phosphinocarbonsäuren sind vorzugsweise solche, bei denen $R_F$ ein verzweigter oder linearer Fluoralkylrest mit 3 bis 10 Kohlenstoffatomen ist.

Bevorzugt sind fluoralkylgruppenhaltige Carbonsäureester von Phosphono- oder Phosphinocarbonsäuren, bei denen $R_H$ für einen Alkylrest mit einem oder zwei Kohlenstoffatomen steht.

Besonders bevorzugt sind fluoralkylgruppenhaltige Carbonsäureester von Phosphono- oder Phosphinocarbonsäuren, bei denen n eins oder zwei ist.

Fluoralkylgruppenhaltige Carbonsäureester von Phosphonooder Phosphinocarbonsäuren, in denen m eins ist, sind besonders bevorzugt.

Besonders bevorzugte fluoralkylgruppenhaltige Carbonsäureester von Phosphonocarbonsäuren weisen beispielsweise folgende Struktur auf:

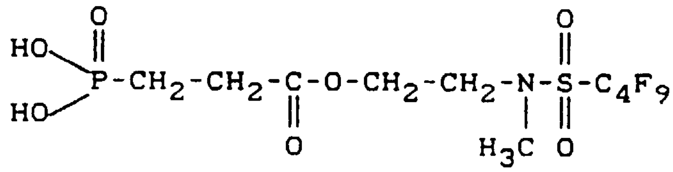

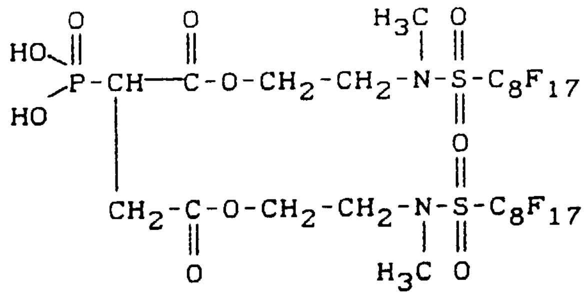

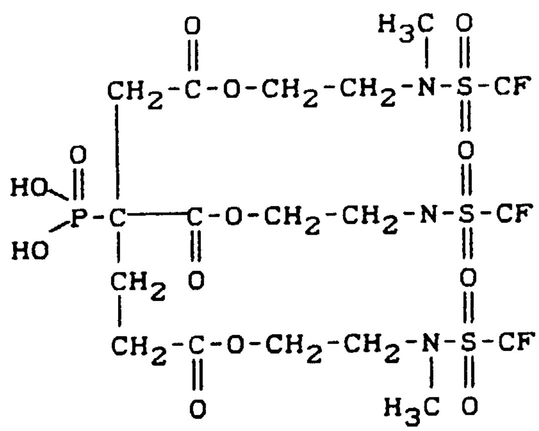

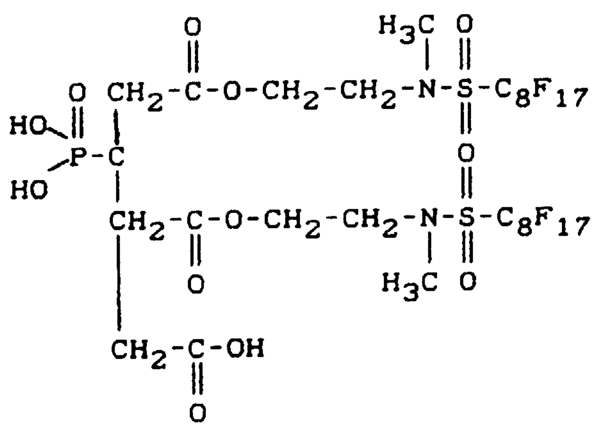

Besonders bevorzugt sind die im folgenden aufgelisteten Reste:

Beispiele für $R_F$:

$CF_3-(CF_2)_2-$
$CF_3-(CF_2)_3-$
$CF_3-(CF_2)_5-$
$CF_3-(CF_2)_6-$
$CF_3-(CF_2)_7-$
$CF_3-(CF_2)_{11}-$
$C_6F_5-$
$CF_3-C_6F_4-$
$H-(CF_2)_6-$
$H-(CF_2)_2-O-$
$CF_3-CHF-CF_2-O-$
$CF_3-CF_2-CF_2-O-CF(CF_3)-$
$CF_3-CF_2-[CF_2-O-CF(CF_3)]_2-$
$CF_3-CF_2-[CF_2-O-CF(CF_3)]_3-$

Beispiele für Z:

$-CH_2-$, $-CH(CH_3)-$, $-CH_2-CH_2-$, $-CH_2-CH(CH_3)-$, $-CH(CH_3)-CH_2-$, $-CH_2-CH_2-CH_2-$, $-CH(COOH)-CH_2-$, $-CH_2-CH(CH_2-COOH)-$, $-CH(CH_2-CH_2-COOH)-CH_2-$, $-CH[-CH(COOH)(PO_3H_2)]-$, $-CH(OH)-$, $-C(CH_2-COOH)(CH_2-CH_2-COOH)-$, $-C(CH_2-COOH)(CH_2-CH_2-PO_3H_2)-$, $-C(CH_2-COOH)(-CH(COOH)-CH_2-COOH)-$, $-CH(CH_2-CH_2-COOH)-$, $-CH(CH_2-CH_2-PO_3H_2)-$, $-C(CH_2-CH_2-COOH)_2-$, $-C(CH_2-CH_2-COOH)(CH_2-CH_2-PO_3H_2)-$, $-C(CH_2-CH_2-PO_3H_2)_2-$, $-C(CH_2-COOH)(CH_2-CH_2-CN)-$, $-CH(CH_2-CH_2-CN)-$, $-C(CH_2-CH_2-CN)_2-$, $-C(CH_2-CH_2-CN)(CH_2-CH_2-PO_3H_2)-$, $-C(OH)(CH_3)-CH_2-$, $-C(OH)(CH_3)-CH_2-$, $-C(OH)(CH_3)-CH(COOH)-CH_2-$, $-CH_2-N(CH_2-PO_3H_2)-CH_2-$, $-CH_2-N(CH_2-COOH)-CH_2-$, $-CH_2-NH-CH_2-$, $-CH_2-NH-CH(CH_3)-$, $-CH_2-N(CH_2-PO_3H_2)$ $(CH(CH_3))-$,

Die erfindungsgemäßen fluorgruppenhaltigen Carbonsäureester von Phosphono- oder Phosphinocarbonsäuren lassen sich z.B. durch einstufige Synthese in einer Veresterungsreaktion der entsprechenden Phosphono- oder Phosphinocarbonsäuren oder deren Salzen mit fluorgruppenhaltigen Alkoholen darstellen:

$$[R^1(HO)P(O)\text{-}Z\text{-}COO]_x^- A^{x+} + xHO(CH_2)_n\text{-}[N(R_H)]_m\text{-}Y_m\text{-}R_F$$

$$\rightarrow R^1(HO)P(O)\text{-}Z\text{-}COO\text{-}(CH_2)_n\text{-}[N(R_H)]_m\text{-}Y_m\text{-}R_F + (HO)_xA,$$

wobei

| | |
|---|---|
| $R_F$, $R_H$, Y, Z, m und n | dieselbe Bedeutung wie oben haben, |
| A | ein Wasserstoffkation, ein Ammoniumkation oder ein ein- oder mehrwertiges Metallkation ist, |
| x | eine ganze Zahl ist, die der Ladung des Kation A entspricht. |

Ein weiterer Gegenstand der Erfindung ist die Verwendung der erfindungsgemäßen fluoralkylgruppenhaltigen Carbonsäureester von Phosphono- oder Phosphinocarbonsäuren als grenzflächenaktive Mittel.

Aufgrund der hohen Grenzflächenaktivität der erfindungsgemäßen fluoralkylgruppenhaltigen Carbonsäureester von Phosphono- oder Phosphinocarbonsäuren wirken diese als hochwirksame Tenside, wodurch sie beispielsweise in folgenden Anwendungsgebieten eingesetzt werden können:

In elektrolytischen Prozessen (z.B. bei der galvanischen Verchromung, Verkupferung und Vernickelung, beim Anodisieren und bei der elektrolytischen Entfettung) können die erfindungsgemäßen Verbindungen zur Sprühnebelunterdrückung und zur Verhinderung von Austragsverlusten zugesetzt werden.

In nicht elektrolytischen Badprozessen (z.B. bei der chemischen Verkupferung oder Vernickelung, bei der chemischen Entfettung oder Entrostung, beim Ätzen oder Gravieren, beim Glanztauchen, beim Beizen, Brünieren oder Passivieren, beim Eloxieren oder beim Entmetallisieren) können die erfindungsgemäßen Verbindungen als Sprühnebelunterdrücker und Reinigungshilfsmittel zugesetzt werden.

In Reinigungs- und Pflegemitteln (wie z.B. in Glas-, Herd-, Auto-, Gebäude-, Fassaden- oder Metalloberflächenreinigungsmitteln, in Fleckentfernern, in Shampoos, in Polituren für Möbel, Autos usw., in Selbstglanzemulsionen oder

in Wachsen) können die erfindungsgemäßen Verbindungen als Verlaufs-, Spreit- und Netzmittel sowie zur Unterstützung der Eigenschaften, die die Wiederanschmutzung verhindern, zugesetzt werden.

Die erfindungsgemäßen Verbindungen können als solche oder in Formulierungen als Antibeschlagmittel oder Anlaufschutz (z.B. für Gläser, Metalle oder Kunststoffe) eingesetzt werden.

Die erfindungsgemäßen Verbindungen können als solche oder in Formulierungen als Korrosionsinhibitoren oder Korrosionsschutzüberzüge (z.B. in Polymerisationsreaktionen, für Füllstoffe, Fasern, Salze oder magnetische Feststoffe, in Lacken oder Blutersatzstoffen) eingesetzt werden.

Aufgrund ihrer Neigung, gasdichte Sperrschichten auszubilden und damit das Verdampfen oder Verdunsten von Flüssigkeiten zu verhindern, eignen sich die erfindungsgemäßen Verbindungen auch als Zusätze zu Feuerlöschmitteln.

Die erfindungsgemäßen Verbindungen können als Formtrennmittel eingesetzt werden.

In Farben und Lacken bewirkt ein Zusatz der erfindungsgemäßen Verbindungen eine Verbesserung der Verlaufs-, Netz- und Haftungseigenschaften. Außerdem verhindern sie durch Förderung der Entlüftung die Bildung von Oberflächendefekten (wie z.B. Kraterbildung oder Kantenflucht). Ferner wird durch ihren Zusatz eine bessere Verteilung der Pigmente erreicht. Von besonderem Vorteil ist die nicht schaumstabilisierende Wirkung der erfindungsgemäßen Verbindungen in Rezepturen bei der Herstellung von wasserverdünnbaren Lacken.

Die Neigung der erfindungsgemäßen Verbindungen, hydrophobe und oleophobe Sperrschichten auszubilden, macht einen Einsatz in Bautenschutzmitteln (z.B. zur Isolierung gegen Umwelteinflüsse) möglich.

Die erfindungsgemäßen Verbindungen können als Fließoder Gleitmittel (z.B. in Mineralerzen oder -salzen, auf Magnetbändern oder in Baustoffen) eingesetzt werden.

Die erfindungsgemäßen Verbindungen eignen sich als Schmiermittel, Schneidölzusätze oder Hydrauliköle.

Die erfindungsgemäßen Verbindungen können als Bohrhilfsmittel (z.B. Leistungssteigerung bei Ölbohrungen) eingesetzt werden.

In Fotochemikalien oder bei der Filmherstellung können die erfindungsgemäßen Verbindungen (z.B. als Netzmittel oder Antistatikum) eingesetzt werden.

In Pflanzenschutzmitteln können die erfindungsgemäßen Verbindungen (z.B. als Netz- und Verlaufsmittel) eingesetzt werden.

Ein Zusatz der erfindungsgemäßen Verbindungen zu Ausrüstungsmitteln für Textilien, Leder oder Papier kann beispielsweise die Benetzung oder das Eindringen des Ausrüstungsmittels fördern, zu einer Entschäumung führen oder dessen Hydrophob-/Oleophobwirkung unterstützen.

Die erfindungsgemäßen Verbindungen können als Flammschutzmittel (z.B. in Kunststoffen) eingesetzt werden.

Außerdem ist ein Einsatz der erfindungsgemäßen Verbindungen als Flüssigkristalle möglich.

Die Erfindung soll anhand folgender Beispiele näher erläutert werden.

Beispiel 1

In einer Dreihalskolben-Rührapparatur mit Wasserabscheider werden 0,5 Mol (178,5 g) N-(2-Hydroxyethyl)-N-methyl-perfluorbutylsulfonamid in 150 ml 4-Methylpentan-2-on gelöst und mit 0,5 ml konzentrierter Schwefelsäure versetzt. Diese Lösung wird bis zum Rückfluß erhitzt (116°C). Anschließend versetzt man unter Rückfluß langsam 0,5 Mol (77 g) 3-Phosphonopropansäure. Die Temperatur wird solange am Rückfluß (100°C) gehalten, bis die komplette Menge Wasser (0,5 Mol) aus dem Reaktionsgemisch abdestilliert ist, und die Temperatur wieder auf 116°C steigt.

Anschließend wird das Lösungsmittel bei 116°C abdestilliert, und das erhaltene Produkt bei 50°C und 50 mbar getrocknet. Die Ausbeute des gewünschten fluorgruppenhaltigen Carbonsäureesters von 3-Phosphonopropansäure beträgt 238,6 g (entsprechend 96,8 % der Theorie). Die Oberflächenspannung einer 0,1 %igen wäßrigen Lösung beträgt 28,1 mN/m, die einer entsprechenden 1 %igen Lösung 20,4 mN/m (gemessen mit einem Ringtensiometer der Fa. Lauda).

Beispiel 2

In einer Dreihalskolben-Rührapparatur mit Wasserabscheider werden 0,5 Mol (278,5 g) N-(2-Hydroxyethyl)-N-methyl-perfluoroctylsulfonamid in 150 ml 4-Methylpentan-2-on gelöst und mit 0,5 ml konzentrierter Schwefelsäure versetzt. Diese Lösung wird bis zum Rückfluß erhitzt (116°C). Anschließend versetzt man unter Rückfluß langsam 0,5 Mol (77 g) 3-Phosphonopropansäure. Die Temperatur wird solange am Rückfluß (100°C) gehalten, bis die komplette Menge Wasser (0,5 Mol) aus dem Reaktionsgemisch abdestilliert ist, und die Temperatur wieder auf 116°C steigt.

Anschließend wird das Lösungsmittel bei 116°C abdestilliert, und das erhaltene Produkt bei 50°C und 50 mbar getrocknet. Die Ausbeute des gewünschten fluorgruppenhaltigen Carbonsäureesters von 3-Phosphonopropansäure beträgt 342,2 g (entsprechend 98,8 % der Theorie). Die Oberflächenspannung einer 0,1 %igen wäßrigen Lösung beträgt 31 mN/m (gemessen mit einem Ringtensiometer der Fa. Lauda).

Beispiel 3

In einer Dreihalskolben-Rührapparatur mit Wasserabscheider werden 0,4 Mol (222,8 g) N-(2-Hydroxyethyl)-N-methyl-perfluoroctyl-sulfonamid in 150 ml 4-Methylpentan-2-on gelöst und mit 0,5 ml konzentrierter Schwefelsäure versetzt. Diese Lösung wird bis zum Rückfluß erhitzt (116°C). Anschließend versetzt man unter Rückfluß langsam mit 0,2 Mol (39,6 g) Phosphonoethan-1,2-dicarbonsäure. Die Temperatur wird solange am Rückfluß (100°C) gehalten, bis die komplette Menge Wasser (0,4 Mol) aus dem Reaktionsgemisch abdestilliert ist, und die Temperatur wieder auf 116°C steigt.

Anschließend wird das Lösungsmittel bei 116°C abdestilliert und das erhaltene Produkt bei 50°C und 50 mbar getrocknet. Die Ausbeute des gewünschten fluorgruppenhaltigen Carbonsäureesters von Phosphonoethan-1,2-dicarbonsäure beträgt 247 g (entsprechend 96,8 % der Theorie). Die Oberflächenspannung einer 0,1%igen wäßrigen Lösung beträgt 34,5 mN/m, die einer entsprechenden 1%igen Lösung 28,4 mN/m (gemessen mit einem Ringtensiometer der Fa. Lauda).

Beispiel 4

In einer Dreihalskolben-Rührapparatur mit Wasserabscheider werden 3,0 Mol (1071 g) N-(2-Hydroxyethyl)-N-methyl-perfluorbutylsulfonamid in 850 ml Chlorbenzol gelöst und mit 3 ml konzentrierter Schwefelsäure versetzt. Diese Lösung wird auf 120°C erhitzt. Anschließend versetzt man langsam mit 1,0 Mol (54,0 g) 2-Phosphonobutan-1,2,4-tricarbonsaure. Nach erfolgter Zugabe wird solange am Rückfluß gehalten, bis die komplette Menge Wasser (0,6 Mol) aus dem Reaktionsgemisch abdestilliert ist.

Anschließend wird das Lösungsmittel bei 70°C und 70 mbar abdestilliert und das erhaltene Produkt vollständig getrocknet. Die Ausbeute des gewünschten fluorgruppenhaltigen Carbonsäureesters von 2-Phosphonobutan-1,2,4-tricarbonsäure beträgt 1281 g (entsprechend 99,5 % der Theorie). Die Oberflächenspannung einer 0,1%igen wäßrigen Lösung beträgt 22,4 mN/m (gemessen mit einem Ringtensiometer der Fa. Lauda).

Beispiel 5

In einer Dreihalskolben-Rührapparatur mit Wasserabscheider werden 0,4 Mol (222,8 g) N-(2-Hydroxyethyl)-N-methyl-perfluoroctyl-sulfonamid in 150 ml 4-Methylpentan-2-on gelöst und mit 0,5 ml konzentrierter Schwefelsäure versetzt. Diese Lösung wird bis zum Rückfluß erhitzt (116°C). Anschließend versetzt man unter Rückfluß langsam mit 0,2 Mol (54 g) 2-Phosphonobutan-1,2,4-tricarbonsäure. Die Temperatur wird solange am Rückfluß (100°C) gehalten, bis die komplette Menge Wasser (0,4 Mol) aus dem Reaktionsgemisch abdestilliert ist, und die Temperatur wieder auf 116°C steigt.

Anschließend wird das Lösungsmittel bei 116°C abdestilliert und das erhaltene Produkt bei 50°C und 50 mbar getrocknet. Die Ausbeute des gewünschten fluorgruppenhaltigen Carbonsäureesters von 2-Phosphonobutan-1,2,4-tricarbonsäure beträgt 268 g (entsprechend 99,4 % der Theorie). Die Oberflächenspannung einer 0,1%igen wäßrigen Lösung beträgt 28,2 mN/m, die einer entsprechenden 1%igen Lösung 27,6 mN/m (gemessen mit einem Ringtensiometer der Fa. Lauda).

**Patentansprüche**

1. Fluoralkylgruppenhaltige Carbonsäureester von Phosphono- oder Phosphinocarbonsäuren der allgemeinen Formel (I)

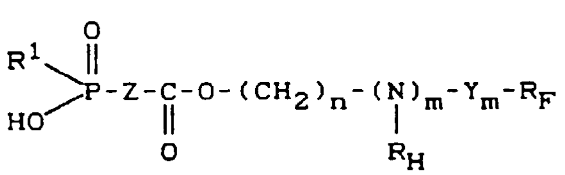

(I),

worin

$R^1$ eine Hydroxylgruppe, eine Methylgruppe, eine Ethylgruppe oder ein Phenylrest ist,

$R_F$ ein verzweigter oder linearer Fluoralkylrest mit 1 bis 18 Kohlenstoffatomen ist oder ein fluorierter, verzweigter oder linearer Mono- oder Polyether mit 1-18 Kohlenstoffatomen ist,

$R_H$ ein verzweigter oder linearer Alkylrest mit 1 bis 10 Kohlenstoffatomen ist,

Y eine $>C=O$,

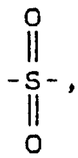, 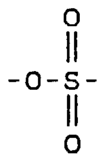 oder 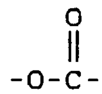 Gruppe

darstellt,

Z für einen linearen oder verzweigten Alkylenrest mit 1 bis 20 Kohlenstoffatomen oder für einen durch Aminogruppen, die ihrerseits durch $C_1$- bis $C_{10}$-Alkylgruppen oder Arylgruppen substituiert sein können, unterbrochenen linearen oder verzweigten Alkylenrest mit 1 bis 20 Kohlenstoffatomen oder für einen durch eine oder mehrere Gruppen der Struktur $-COR^2$ substituierten, linearen oder verzweigten Alkylenrest mit 1 bis 20 Kohlenstoffatomen oder für einen durch eine oder mehrere Gruppen der Struktur $-PO_3HR^1$ substituierten, linearen oder verzweigten Alkylenrest mit 1 bis 20 Kohlenstoffatomen steht, wobei $R^1$ dieselbe Bedeutung wie oben hat,

m 0 oder 1 sein kann,

n eine ganze Zahl von 0 bis 6 darstellt und

$R^2$ für einen Hydroxylrest oder einen Rest der Struktur

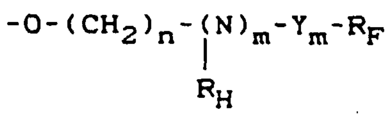

oder für einen linearen oder verzweigten Alkoxyrest mit 1 bis 20 Kohlenstoffatomen steht, wobei n, m, $R_H$, $R_F$ und Y die gleiche Bedeutung wie oben haben,

sowie deren Salze.

**2.** Fluoralkylgruppenhaltige Carbonsäureester von Phosphono- oder Phosphinocarbonsäuren gemäß Anspruch 1, dadurch gekennzeichnet, daß $R_F$ ein verzweigter oder linearer Fluoralkylrest mit 3 bis 10 Kohlenstoffatomen ist.

**3.** Fluoralkylgruppenhaltige Carbonsäureester von Phosphono- oder Phosphinocarbonsäuren gemäß Anspruch 1, dadurch gekennzeichnet, daß $R_H$ für einen Alkylrest mit einem oder zwei Kohlenstoffatomen steht.

**4.** Fluoralkylgruppenhaltige Carbonsäureester von Phosphono- oder Phosphinocarbonsäuren gemäß Anspruch 1, dadurch gekennzeichnet, daß n eins oder zwei ist.

**5.** Fluoralkylgruppenhaltige Carbonsäureester von Phosphono- oder Phosphinocarbonsäuren gemäß Anspruch 1, dadurch gekennzeichnet, daß m eins ist.

**6.** Verfahren zur Herstellung der fluoralkylgruppenhaltigen Carbonsäureester von Phosphono- oder Phosphinocarbonsäuren gemäß den Ansprüchen 1 bis 5, dadurch gekennzeichnet, daß in einer einstufigen Synthese die entsprechenden Phosphono- oder Phosphinocarbonsäuren der Formel (II) oder deren Salze

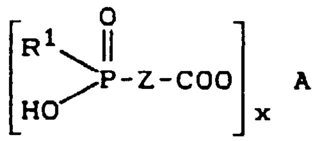

(II),

wobei A ein Wasserstoffkation, ein Ammoniumkation oder ein ein- oder mehrwertiges Metallkation und X eine ganze Zahl, die der Ladung des Kations A entspricht, ist,

wobei $R^1$, Z dieselbe Bedeutung wie oben haben,

mit den entsprechenden fluorgruppenhaltigen Alkoholen der Formel (III)

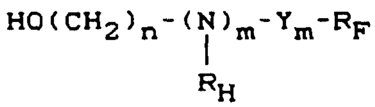

(III),

wobei n, m, $R_H$, Y und $R_F$ dieselbe Bedeutung wie oben haben,

verestert werden.

7. Verwendung der fluorgruppenhaltigen Carbonsäureester von Phosphono- oder Phosphinocarbonsäuren gemäß den Ansprüchen 1 bis 5 als grenzflächenaktive Mittel.

**Claims**

1. Fluoroalkyl group-containing carboxylic acid esters of phosphonocarboxylic acids or phosphinocarboxylic acids of the general formula (I)

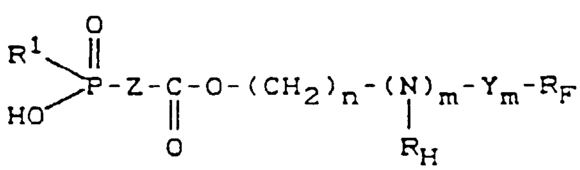

(I),

wherein

$R^1$ is a hydroxyl group, a methyl group, an ethyl group or a phenyl radical,

$R_F$ is a branched or straight-chain fluoroalkyl radical having from 1 to 18 carbon atoms or a fluorinated, branched or straight-chain monoether or polyether having from 1 to 18 carbon atoms,

$R_H$ is a branched or straight-chain alkyl radical having from 1 to 10 carbon atoms,

Y denotes a >C=O,

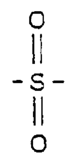, 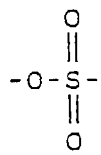 or 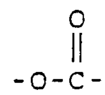

group,

Z stands for a straight or branched-chain alkylene radical having from 1 to 20 carbon atoms, or

a straight or branched-chain alkylene radical having from 1 to 20 carbon atoms interrupted by amino groups which may themselves be substituted by $C_1$- to $C_{10}$- alkyl groups or aryl groups, or
a straight or branched-chain alkylene radical having from 1 to 20 carbon atoms, which is substituted by one or more groups of the structure $-COR^2$, or
a straight or branched-chain alkylene radical having from 1 to 20 carbon atoms, which is substituted by one or more groups of the structure $-PO_3HR^1$, wherein $R^1$ has the same meaning as above,

m can be 0 or 1,

n denotes an integer from 0 to 6, and

$R^2$ stands for a hydroxyl radical or
a radical of the structure

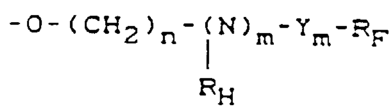

or a straight or branched-chain alkoxy radical having from 1 to 20 carbon atoms, wherein n, m, $R_H$, $R_F$ and Y have the same meanings as above,

and salts thereof.

2. Fluoroalkyl group-containing carboxylic acid esters of phosphonocarboxylic acids or phosphinocarboxylic acids according to Claim 1, characterised in that $R_F$ is a branched or straight-chain fluoroalkyl radical having from 3 to 10 carbon atoms.

3. Fluoroalkyl group-containing carboxylic acid esters of phosphonocarboxylic acids or phosphinocarboxylic acids according to Claim 1, characterised in that $R_H$ stands for an alkyl radical having one or two carbon atoms.

4. Fluoroalkyl group-containing carboxylic acid esters of phosphonocarboxylic acids or phosphinocarboxylic acids according to Claim 1, characterised in that n is one or two.

5. Fluoroalkyl group-containing carboxylic acid esters of phosphonocarboxylic acids or phosphinocarboxylic acids according to Claim 1, characterised in that m is one.

6. Process for the preparation of the fluoroalkyl group-containing carboxylic acid esters of phosphonocarboxylic acids or phosphinocarboxylic acids according to Claims 1 to 5, characterised in that in a single-stage synthesis the corresponding phosphonocarboxylic acids or phosphinocarboxylic acids of the formula (II) or salts thereof

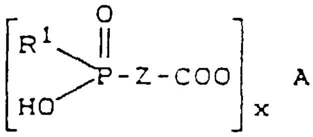 (II),

wherein A is a hydrogen cation, an ammonium cation or a mono- or polyvalent metal cation and X is an integer which corresponds to the charge of the cation A,

wherein $R^1$ and Z have the same meanings as above, are esterified with the corresponding fluoro group-containing alcohols of the formula (III)

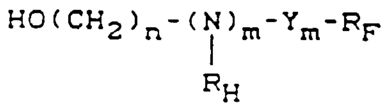 (III)

wherein n, m, $R_H$, Y and $R_F$ have the same meaning as above.

7. Use of the fluoroalkyl group-containing carboxylic acid esters of phosphonocarboxylic acids or phosphinocarboxylic acids according to Claims 1 to 5 as surface-active agents.

**Revendications**

1. Esters carboxyliques d'acides phosphono- ou phosphinocarboxyliques, contenant des groupes fluoroalkyle, répondant à la formule générale (I)

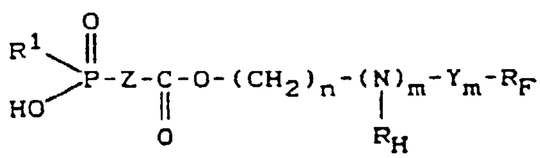 , (I),

dans laquelle

$R^1$ représente un groupe hydroxyle, un groupe méthyle, un groupe éthyle ou un radical phényle,

$R_F$ représente un radical fluoroalkyle ramifié ou linéaire contenant de 1 à 18 atomes de carbone ou encore un monoéther ou un polyéther fluoré, ramifié ou linéaire, contenant de 1 à 18 atomes de carbone,

$R_H$ représente un radical alkyle ramifié ou linéaire contenant de 1 à 10 atomes de carbone,

Y représente un groupe $>$C=O,

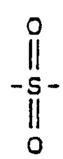, 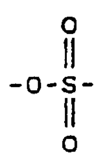

ou

$$-O-\overset{\overset{\displaystyle O}{\|}}{C}-$$

Z représente un radical alkylène linéaire ou ramifié contenant de 1 à 20 atomes de carbone ou représente un radical alkylène linéaire ou ramifié contenant de 1 à 20 atomes de carbone, interrompu par des groupes amino qui, quant à eux, peuvent porter un ou plusieurs substituants identiques ou différents alkyle en $C_1$-$C_{10}$ ou aryle , ou représente un radical alkylène linéaire ou ramifié contenant de 1 à 20 atomes de carbone portant, à titre de substituants, un ou plusieurs groupes de structure $-COR^2$, ou encore représente un radical alkylène linéaire ou ramifié contenant de 1 à 20 atomes de carbone portant, à titre de substituants, un ou plusieurs groupes de structure $-PO_3HR^1$, $R^1$ ayant la même signification que celle indiquée ci-dessus,

m peut représenter 0 ou 1,

n représente un entier de 0 à 6, et

$R^2$ représente un radical hydroxyle ou un radical de structure

$$-O-(CH_2)_n-\underset{\underset{\displaystyle R_H}{|}}{(N)}_m-Y_m-R_F$$

ou représente un radical alcoxy linéaire ou ramifié contenant de 1 à 20 atomes de carbone, n, m, $R_H$, $R_F$ et Y ayant les mêmes significations que celles indiquées ci-dessus,

ainsi que leurs sels.

2. Esters carboxyliques d'acides phosphono- ou phosphinocarboxyliques contenant des groupes fluoroalkyle, selon la revendication 1, caractérisés en ce que $R_F$ représente un radical fluoroalkyle ramifié ou linéaire contenant de 3 à 10 atomes de carbone.

3. Esters carboxyliques d'acides phosphono- ou phosphinocarboxyliques contenant des groupes fluoroalkyle, selon la revendication 1, caractérisés en ce que $R_H$ représente un radical alkyle contenant 1 ou 2 atomes de carbone.

4. Esters carboxyliques d'acides phosphono- ou phosphinocarboxyliques contenant des groupes fluoroalkyle, selon la revendication 1, caractérisés en ce que n représente 1 ou 2.

5. Esters carboxyliques d'acides phosphono- ou phosphinocarboxyliques contenant des groupes fluoroalkyle, selon la revendication 1, caractérisés en ce que m est égal à 1.

6. Procédé pour la préparation des esters carboxyliques d'acides phosphono- ou phosphinocarboxyliques, contenant des groupes fluoroalkyle, selon les revendications 1 à 5, caractérisé en ce que, dans une synthèse en une seule étape, on estérifie les acides phosphono- ou phosphinocarboxyliques correspondants de formule (II) ou leurs sels

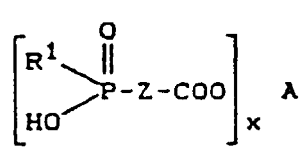

(II),

dans laquelle A représente un cation hydrogène, un cation ammonium ou un cation métallique mono- ou polyvalent et X représente un entier qui correspond à la charge du cation A, $R^1$, Z ayant la même signification que celle indiquée ci-dessus, avec les alcools correspondants contenant des groupes fluoro, répondant à la formule (III)

$$HO(CH_2)_n-\underset{\displaystyle R_H}{\underset{|}{(N)}}_m-Y_m-R_F \qquad (III)$$

dans laquelle n, m, RH, Y et $R_F$ ont la même signification que celle indiquée ci-dessus.

**7.** Utilisation des esters carboxyliques d'acides phosphono- ou phosphinocarboxyliques, contenant des groupes fluoro, selon les revendications 1 à 5, comme agents tensioactifs.